# EUROPÄISCHE PATENTSCHRIFT

(11) **EP 1 330 599 B1**
(45) Veröffentlichungstag und Bekanntmachung des Hinweises auf die Patenterteilung: **03.08.2005**
(21) Anmeldenummer: 01987843.8
(22) Anmeldetag: 22.10.2001
(51) Int. Cl.: F02B 43/00

(54) **BRENNKRAFTMASCHINE MIT EINBLASUNG VON GASFÖRMIGEM KRAFTSTOFF**
INTERNAL COMBUSTION ENGINE WITH INJECTION OF GASEOUS FUEL
MOTEUR A COMBUSTION INTERNE AVEC INJECTION DE CARBURANT GAZEUX

(30) Priorität: 22.10.2000 DE 10052336
(43) Veröffentlichungstag der Anmeldung: 30.07.2003
(73) Patentinhaber: Westport Germany GmbH, 44139 Dortmund (DE)
(72) Erfinder: HILGER, Ulrich, 45138 Essen (DE); BARTUNEK, Bernd, 40789 Monheim (DE)
(74) Vertreter: Gesthuysen, von Rohr & Eggert
(86) Internationale Anmeldenummer: PCT/EP2001/012182
(87) Internationale Veröffentlichungsnummer: WO 2002/033236

(56) Entgegenhaltungen:
- EP-A- 0 916 830
- US-A- 4 627 405
- US-A- 4 787 349
- US-A- 5 329 908
- PATENT ABSTRACTS OF JAPAN vol. 2000, no. 13, 5. Februar 2001 (2001-02-05) & JP 2000 291495 A (ISUZU CERAMICS RES INST CO LTD), 17. Oktober 2000 (2000-10-17)
- PATENT ABSTRACTS OF JAPAN vol. 1997, no. 10, 31. Oktober 1997 (1997-10-31) & JP 09 159169 A (TOKYO GAS CO LTD;OSAKA GAS CO LTD; TOHO GAS CO LTD; MITSUI ENG & S), 20. Juni 1997 (1997-06-20)

## Beschreibung

Die Erfindung bezieht sich auf ein Verfahren zum Betreiben einer luftverdichtenden Brennkraftmaschine, die zumindest einen eine Brennraummulde beinhaltenden Kolben aufweist, der in einem von einem Zylinderkopf unter Bildung eines Arbeitsraumes abgedeckten Zylinder bewegbar ist, wobei in dem Zylinderkopf eine zu der Brennraummulde im wesentlichen zentrisch ausgerichtete Gaseinblasedüse, durch die ein brennbarer, gasförmiger Kraftstoff in den Arbeitsraum eingebracht wird sowie eine in geringem Abstand zur Gaseinblasedüse angebrachte, in die Brennraummulde hineinragende Zündvorrichtung angeordnet ist. Weiterhin betrifft die Erfindung eine entsprechend ausgebildete Brennkraftmaschine.

Eine derartige Brennkraftmaschine ist aus der US 5,329,908 A bekannt. Die Gaseinblasedüse ist so ausgebildet, daß der gasförmige Kraftstoff sich beim Einblasevorgang durch eine dann gebildete ringförmige Austrittsöffnung als Wolke in die Brennraummulde ausbreitet. Ein Teil der Wolke trifft dabei auf eine Zündvorrichtung in Form einer Glühkerze, und das sich bildende Gas-Luftgemisch wird an der Glühkerze entzündet. Ist hierbei der Gasdruck hoch genug, erfolgt die Gaseinblasung kurz vor dem oberen Totpunkt, um so bei inhomogener Gemischbildung einen dem Dieselmotor vergleichbaren Wirkungsgrad zu erzielen. Sinkt jedoch der Druck des gasförmigen Kraftstoffs unter einen vorgegebenen Wert, z.B. unter 2.000 psi (ca. 13,79 MPa) ab, wird von einem Steuergerät der Einblasebeginn und die Einblasedauer in den Bereich des unteren Totpunkts des jeweiligen Kolbens in dem entsprechenden Zylinder verlegt, um einen gegenüber dem Zylinderinnendruck ausreichend hohen Gasdruck zu erreichen und so ein Einströmen des gasförmigen Kraftstoffes in den Zylinder sicherzustellen. Hierbei wird ein für die ottomotorische Verbrennung typisches homogenes Gemisch gebildet, das durch die bestehende Neigung zu klopfender Verbrennung ein gegenüber Verbrennungsverfahren mit inhomogener Brennstoff-Luft-Gemischbildung erheblich reduziertes Verdichtungsverhältnis erfordert. Da die Brennkraftmaschine mit einem konstanten Verdichtungsverhältnis betrieben wird, richtet sich das zu wählende Verdichtungsverhältnis nach der Betriebsart mit der höchsten Klopfneigung, also bei homogener Gemischbildung. Dadurch sind sowohl ein unzuverlässiger, nicht aussetzerfreier Betrieb dieser Brennkraftmaschine besonders unter den für den Fahrzeugbetrieb typischen instationären Betriebsbedingungen als auch ein nicht optimales Vollastwirkungsgradverhalten gegeben.

Die US 4,787,349 A betrifft die Direkteinspritzung von flüssigem Kraftstoff, der mittels einer Zündvorrichtung gezündet wird. Die Zündvorrichtung weist eine Abschirmhülse mit seitlichen Brennstoffdurchtrittsöffnungen auf, die sowohl als Eintrittsöffnungen für in die Hülse eintretenden Kraftstoff als auch als Austrittsöffnung für aus der Hülse austretendes, brennendes Kraftstoff-Luft-Gemisch fungieren. Bei einem Ausführungsbeispiel kann lediglich zusätzlich mindestens eine Öffnung in der bodenseitigen Stirnfläche der Abschirmhülse als Austrittsöffnung für das brennende Kraftstoff-Luft-Gemisch vorgesehen sein.

Der vorliegenden Erfindung liegt die Aufgabe zugrunde, ein Verfahren zum Betreiben einer derartigen Brennkraftmaschine sowie eine entsprechend ausgebildete Brennkraftmaschine anzugeben, wobei unter allen Betriebsbedingungen ein zuverlässiger und sehr schadstoffarmer Betrieb bei gleichzeitig für selbstzündende Brennkraftmaschinen typischen hohen Wirkungsgraden möglich ist.

Die obige Aufgabe wird durch ein Verfahren gemäß Anspruch 1 oder eine luftverdichtende Brennkraftmaschine gemäß Anspruch 7 gelöst. Vorteilhafte Weiterbildungen sind Gegenstand der Unteransprüche.

Der Erfindung liegt zunächst einmal die Erkenntnis zugrunde, daß die Verminderung der Schadstoffemissionen von Dieselmotoren einen wesentlichen Beitrag zur Verbesserung der Luftqualität, besonders im innerstädtischen Bereich bzw. in Ballungsräumen darstellt. Hierzu können, insbesondere wegen der erheblich geringeren Partikel- und Stickoxidemissionen sowie dem deutlich verminderten Beitrag zur Smogbildung der Einsatz schadstoffarmer Erdgasmotoren eine deutliche Reduzierung der Schadstoffbelastung bewirken.

Heutige in Nutzfahrzeugen eingesetzte Gasmotoren arbeiten nach dem Otto-Verfahren mit homogener Gemischbildung, Fremdzündung und Drosselregelung und werden wegen der im Nutzfahrzeugbereich erforderlichen Leistungs- und Drehmomentcharakteristik, überwiegend von konventionellen Dieselmotoren abgeleitet. Das gegenüber dem Dieselmotor geänderte Gemischbildungsverfahren sowie die Fremdzündung erfordern Modifikationen an Ansaugsystem und Zylinderkopf. Aufgrund des geänderten Verbrennungsprozesses ist außerdem eine geänderte Brennraummulde im Kolben erforderlich. Die Motorenhersteller sind meistens bestrebt die Anzahl der an den Gasbetrieb anzupassenden Motorkomponenten so gering wie möglich zu halten. Hierdurch wird versucht, möglichst unter Beibehaltung der für konventionelle Nutzfahrzeugmotoren üblichen hohen Anforderungen an die Dauerhaltbarkeit die höheren Herstellungskosten für Gasmotoren in Grenzen zu halten.

Da Nutzfahrzeug-Gasmotoren anfänglich vor allem unter dem Gesichtspunkt niedriger Schadstoffemissionen eingesetzt wurden, wurden überwiegend mit stöchiometrischem Gas-Luftgemisch arbeitende Verbrennungsverfahren in Verbindung mit einem Dreiwegkatalysator eingesetzt. Die Gaszumischung erfolgte meist durch einen zentral im Ansaugsystem angeordneten Gasmischer mit elektronisch geregelter Gaszufuhr. Bei neueren Gassystemen wird zur Verbesserung der Gemischgleichverteilung und der Einhaltung der stöchiometrischen Gemischzusammensetzung bei instationärem Motorbetrieb auf eine "Multipoint" Einblasung vor das Einlassventil eines jeden Zylinders übergegangen. Zur Einhaltung des für den Dreiwegkatalysatorbetrieb erforderlichen stöchiometrischen (λ=1) Gas-Luftgemisches wird die von Benzinmotoren her bekannte "Closed-Loop" Lambda-Regelung mittels Sauerstoffsensor eingesetzt. Das Verdichtungsverhältnis wird im allgemeinen zur Sicherstellung einer ausreichenden Sicherheit gegenüber klopfender Verbrennung auf Werte von 11 bis 11,5 begrenzt.

Die mit nicht aufgeladenen λ=1-geregelten Gasmotoren erreichbare Leistung liegt, aufgrund der Verminderung des vom Motor angesaugten Luftvolumens durch das im Saugrohr zugemischte Gas, um etwa 5% unter der dem Niveau vergleichbarer Saugdieselmotoren. Im Vergleich zu den heute üblichen aufgeladenen Dieselmotoren ergeben sich unter Berücksichtigung der grundsätzlich höheren thermischen Belastung bei Gasmotoren Minderleistungen von bis zu 15%. Hierbei ist schon die durch die zusätzliche Anwendung der Abgasrückführung mit AGR-Raten von bis zu 15% mögliche Absenkung der thermischen Belastung berücksichtigt. Ein vollständiger Ausgleich der Minderleistung bei Gasmotoren läßt sich nur über eine Vergrößerung des Hubraumes erreichen.

Das Verbrauchsverhalten von für λ=1-geregelten Nutzfahrzeug- Gasmotoren ist verfahrensbedingt durch einen gegenüber vergleichbaren Dieselmotoren energetischen Mehrverbrauch von 15 bis 20% im stationären 13-Stufen Test gekennzeichnet. Bei Betrieb mit hohen Niedriglastanteilen, wie z.B. für den Stadtbusbetrieb typisch, wurden aufgrund der Drosselregelung sogar Mehrverbräuche von über 40% ermittelt.

Die bei stöchiometrisch geregelten Gasmotoren gegenüber heutigen Dieselmotoren bestehenden Leistungs- und Verbrauchsnachteile lassen sich durch den Einsatz von Magermotorkonzepten deutlich reduzieren. Die Gemischbildung erfolgt meist in Strömungsrichtung hinter dem Turbolader durch einen zentral im Ansaugsystem angeordneten elektronisch geregelten Gasmischer. Bei Verdichtungsverhältnissen von 1 1 bis 11,5 weist der Magermotor grundsätzlich ähnliche Brennraumgeometrien auf wie sie bei λ=1 geregelten Motoren üblich sind. Aufgrund der mit zunehmender Abmagerung des Erdgas-Luftgemisches stark abnehmenden Verbrennungsgeschwindigkeit muß durch eine geeignete Abstimmung z.B. der Quetschspaltströmung einer zu stark verschleppten Verbrennung mit entsprechend erhöhten HC Emissionen entgegengewirkt werden. Die mit heutigen Magermotoren realisierbaren Luftverhältnisse liegen bei hohen Motorlasten und damit höheren Brenngeschwindigkeiten nicht über λ=1,5. Bei niedrigeren Motorlasten wird jedoch die Magerlauffähigkeit entsprechend dem niedrigeren Verbrennungstemperaturniveau auf λ-Werte von 1,1 bis 1,3 begrenzt.

Die bei Magermotoren geringere thermische Bauteilbelastung erlaubt im Vergleich zu λ=1-geregelten Gasmotoren eine deutliche Anhebung der Ladedrücke, so daß in Verbindung mit Ladeluftkühlung effektive Mitteldrücke von bis zu 14 bar (1,4 MPa) möglich sind. Damit entspricht der Drehmomentverlauf weitgehend dem einer großen Anzahl heute auf dem Markt befindlicher Dieselmotoren. Im Vergleich zu dem bei Euro 3 Dieselmotoren erreichten Leistungsniveau treten bei Magergasmotoren immer noch zum Teil erhebliche Leistungseinbußen auf.

Da die Abmagerungsfähigkeit heutiger Mager-Gasmotoren besonders im unteren Teillastbereich durch einen schleppenden Verbrennungsablaufes von Erdgas auf λ-Werte von 1,2 bis 1,4 beschränkt ist, ist auch .bei diesen Motoren eine Drosselregelung erforderlich. Dementsprechend werden im ECE R49 Abgastest gegenüber vergleichbaren Dieselmotoren je nach Auslegung des Motorkonzeptes mehr als 15% höhere Verbrauchswerte festgestellt. Im praktischen Fahrbetrieb z.B. eines Linienbusses, ergeben sich damit erhöhte Kraftstoffverbrauchswerte von bis zu 30%.

Erdgas-Magerkonzepte zur Einhaltung der für das Jahr 2005 bestehenden Grenzwerte (Euro 4) dürften im wesentlichen durch die Weiterentwicklung bestehender Magermotorkonzepte im Hinblick auf eine Erweiterung der Magerlaufgrenzen zur Reduzierung der NOx-Emissionswerte unter die Grenze von 3 g/kWh gekennzeichnet sein. Hierzu werden Brennverfahren mit intensivierter Ladungsbewegung zur Kompensation der bei sehr mageren Gemischen stark abnehmenden Brenngeschwindigkeit mit relativen A/F Verhältnis von bis zu 1,6 in vollastnahen Betriebspunkten entwickelt. Entsprechende Magermotoren weisen neben Brennverfahren mit erweiterter Magerlauffähigkeit eine Abgasturboaufladung mit Ladeluftkühlung auf. Das Verdichtungsverhältnis liegt je nach Konzept zwischen 11,7 und 13. Die mit solchen Konzepten im ECE R49 Abgastest erreichbaren NOx-Werte dürften, bei HC-Werten vor Katalysator von etwa 2,9 g/kWh, zwischen 1,5 g/kWh und 2 g/kWh liegen.

Aufgrund des hohen Verdichtungsverhältnisses sowie dem mageren Betrieb zumindest im Vollastbereich läßt sich der maximale Motorwirkungsgrad auf bis zu 40% steigern. Über dem ECE R49 Testzyklus dürften sich damit gegenüber zukünftigen Dieselmotorkonzepten der Emissionsstufe Euro 4 nur noch um etwa 5% bis 15% höhere Verbrauchswerte ergeben. Die erreichbaren Mitteldrücke liegen je nach Auslegung des Turboladers bei einem maximalen effektiven Mitteldruck von 14 bar bis 18 bar (1,4 bis 1,8 MPa).

In neuerer Zeit sind neben den Entwicklungen auf dem Gebiet der homogenen Magerverfahren auch Verfahren mit Hochdruck-Gaseinspritzung direkt in den Brennraum vorgestellt worden. Hierbei handelt es sich um ungedrosselte, hochverdichtete (Verdichtungsverhältnis 16 bis 18) Gasmotoren, mit denen versucht wird, das niedrige Schadstoffemissionsniveau von Gasmotoren mit homogener Gemischbildung (Otto-Gasmotoren) mit dem erheblich besseren Wirkungsgradverhalten von direkteinspritzenden Dieselmotoren zu verbinden. Außerdem sollte eine weitgehende Unempfindlichkeit des motorischen Betriebsverhaltens von der Methanzahl des eingesetzten gasförmigen Kraftstoffes erreicht werden.

Der gasförmige Kraftstoff wird hierbei gegen Ende des Verdichtungstaktes unter hohem Druck von etwa 200 bar (20 MPa) direkt in den im Kolben angeordneten Brennraum eines ungedrosselten, hochverdichteten Motors eingeblasen. Dadurch bildet sich, ähnlich wie beim Dieselmotor, ein inhomogenes Gas-Luftgemisch. Das Gas wird mittels eines schnellschaltenden Gaseinblaseventils in die weitgehend der Brennraumform bei Dieselmotoren entsprechende Kolbenmulde eingeblasen. Wegen der unzureichenden Selbstzündungswilligkeit von Erdgas, wird die Zündung des Gemisches durch eine Zündquelle wie z.B. eine Glühkerze sichergestellt. Das zur Einspritzung des Erdgases erforderliche Einblasesystem besteht aus einem zentralen Gasverteilsystem sowie aus elektromagnetisch oder elektro-hydraulisch betätigten Gasventilen, durch die kennfeldgesteuert die Dosierung und die Einblasebeginnanpassung des Kraftstoffes erfolgt.

Vorschlagsgemäß ist vorgesehen, daß bei konstant auf 200 bis 300 bar (20 bis 30 MPa) gehaltenem Gaseinblasedruck ein aus einer Kraftstoffaustrittsöffnung der Gaseinblasedüse austretender Kraftstoffstrahl mit geringer freier Strahllänge von 5 bis 10 Prozent des Brennraummuldendurchmessers auf die Zündvorrichtung derart ausgerichtet ist, daß der Kraftstoffstrahl in dem Bereich von zumindest einer Brennstoffdurchtrittsöffnung auftrifft, die in eine die Zündvorrichtung umgebende Abschirmhülse eingelassen ist. Entsprechend ist die Brennkraftmaschine ausgebildet. Die Abschirmhülse bewirkt, daß einerseits der Raum zwischen der Abschirmhülse und der Zündvorrichtung vor den pulsierenden Strömungen des Brennstoff-Luftgemisches in dem Arbeitsraum abgeschirmt ist, aber andererseits durch die Brennstoffdurchtrittsöffnung gezielt ein Kraftstoffstrahl in den Raum eingeleitet und entzündet wird. Durch die erfindungsgemäße Gestaltung der Zündvorrichtung in Kombination mit dem auf die Zündvorrichtung ausgerichteten Zündstrahl geringer freier Strahllänge ist, wie Versuche ergeben haben, in Verbindung mit einem für selbstzündende Brennkraftmaschinen (Dieselmotoren) typischen hohen Verdichtungsverhältnis ein betriebssicherer, zuverlässiger und schadstoffarmer Betrieb der Brennkraftmaschine gewährleistet. Darüber hinaus ist durch die Abschirmung der Zündvorrichtung die zuzuführende Heizleistung deutlich gegenüber der bekannten Ausführung reduzierbar.

In weiterer Ausgestaltung ist die Gaseinblasedüse mit weiteren Kraftstoffaustrittsöffnungen zur Verteilung des Kraftstoffs in dem Brennraum versehen. Der durch diese Kraftstoffaustrittsöffnungen austretende gasförmige Kraftstoff wird gleichmäßig in die Brennraummulde verteilt und vermischt sich mit der Brennluft. Das so entstandene Gemisch wird von dem an der Zündvorrichtung entzündeten Kraftstoffstrahl, der sich nach seiner Entzündung ebenfalls in den Brennraum ausbreitet, entflammt. Dabei ist in weiterer Ausgestaltung der Erfindung die Gaseinblasedüse bevorzugt mit fünf bis zwölf Kraftstoffaustrittsöffnungen versehen. Hier erfolgt die Auswahl unter anderem aufgrund des Kolbendurchmessers, des Brennraumdurchmessers, der in Abhängigkeit von der maximalen Kurbelwellendrehzahl erforderlichen Drallunterstützung der Kraftstoff-Luft-Gemischbildung sowie allgemein der Einsatzbedingungen.

In Weiterbildung der Erfindung ist die Gaseinblasedüse zentrisch zu der Brennraummulde ausgerichtet und die Zündvorrichtung seitlich zu der Gaseinblasedüse in die Brennraummulde hineinragend angeordnet. Durch die zentrische Anordnung ist eine gleichmäßig verteilte Einblasung des Kraftstoffs insbesondere in die Brennraummulde und demzufolge auch eine vollständige Vermischung mit der Brennluft ermöglicht beziehungsweise gewährleistet. Gleichzeitig ermöglicht die zentrische Anordnung der Gaseinblasedüse die Ausbildung des Zylinderkopfs als Drei- oder Vierventil-Zylinderkopf.

In weiterer Ausgestaltung ist die Abschirmhülse mit zwei bis zehn, bevorzugt mit vier bis sechs Brennstoffdurchtrittsöffnungen versehen. Die Auswahl erfolgt wieder unter anderem aufgrund des Kolbendurchmessers, des Brennraumdurchmessers, der maximalen Kurbelwellendrehzahl und allgemein der Einsatzbedingungen. Dabei ist es so, dass durch bevorzugt zwei Brennstoffdurchtrittsöffnungen der Kraftstoffstrahl in die Abschirmhülse eintritt, entzündet wird und der entzündete Strahl durch die restlichen Brennstoffdurchtrittsöffnungen in die Brennraummulde austritt. Insgesamt weist die Abschirmhülse somit bis zu sechs Brennstoffdurchtrittsöffnungen auf.

In Weiterbildung der Erfindung ist mindestens ein aus einer Kraftstoffaustrittsöffnung austretende Kraftstoffstrahl auf eine als Eintrittsöffnung ausgebildete Brennstoffdurchtrittsöffnung ausgerichtet und die übrigen unterhalb der Eintrittsöffnung als Austrittsöffnungen ausgebildeten Brennstoffdurchtrittsöffnungen sind so ausgerichtet, dass durch das aus der Abschirmhülse austretende brennende Kraftstoff-Luft-Gemisch Gemischteile im Bereich der Strahlwurzel unter der Gaseinblasedüse entflammt werden. Diese Ausbildung beziehungsweise das entsprechende Verfahren stellt sich für ein zuverlässiges und betriebssicheres Betreiben der Brennkraftmaschine besonders günstig dar, da durch die Ausrichtung des aus einer Kraftstoffaustrittsöffnung der Gaseinblasedüse austretenden Gasstrahles auf eine als Eintrittsöffnung ausgebildete Brennstoffdurchtrittsöffnung in der Abschirmhülse der Glühzündeinrichtung das rasche Austreten eines brennenden Gasstrahles relativ wenig behindert wird und damit ein für das Betriebsverhalten der Brennkraftmaschine vorteilhafter sehr kurzer Zündverzug erreicht wird. Insbesondere sind so Zündverzüge möglich, die deutlich kürzer sind, als die jeweils entsprechenden Einblasedauern für den gasförmigen Kraftstoff.

Vorteilhaft ist die Zündvorrichtung in einer Entfernung von 5% des Durchmessers der Brennraummulde bei größeren Zylinderdurchmessern bis 10% bei kleineren Zylinderdurchmessern von der Gaseinblasedüse entfernt angeordnet. Bei normalen Brennkraftmaschinen ist demzufolge die Zündvorrichtung weitgehend unabhängig von der Zylindergröße fünf bis sieben Millimeter von der Gaseinblasedüse entfernt angeordnet.

In Weiterbildung der Erfindung wird eine Kraftstoffmenge von 5% bis 10% der Vollastmenge vor der Haupteinkraftstoffmenge in den Arbeitsraum eingebracht. Die vor der Hauptmenge des Kraftstoffes in den Brennraum gelangende Gasmenge wird an der Zündvorrichtung entflammt und führt zu einer Verkürzung des Zündverzuges der Hauptgasmenge. Hierdurch wird zum einen ohne Erhöhung der Oberflächentemperatur der Glühzündeinrichtung eine intensivere und damit stabilere Entflammung des Kraftstoff-Luftgemisches als Voraussetzung für geringe Emissionen an Kohlenmonoxid und unverbranntem Kraftstoff erreicht, andererseits liegt zum Zeitpunkt des Beginns der Verbrennung eine kleinere zündfähige Gemischmenge vor, wodurch eine geringere Wärmefreisetzungsrate und damit ein geringeres Verbrennungsgeräusch auftreten.

Eine Weiterbildung der Erfindung ist dadurch gekennzeichnet, dass der Verlauf der Haupteinspritzmenge in zwei bis vier hintereinander erfolgende einzelne Einblasevorgänge unterteilt wird. Hierdurch wird eine besonders für das Glühzündungsverfahren vorteilhafte Steuerung der zeitlichen und örtlichen Verteilung des Kraftstoff-Luftgemisches im Brennraum und damit des Brennverlaufes derart erreicht, dass insbesondere zu Beginn der Verbrennung eine rasche Ausbreitung der brennenden Gemischzonen in der Nähe der Zündeinrichtung auftritt. Im weiteren Verlauf des Kraftstoffeinblasevorganges kann durch eine Erhöhung der Einblasemenge bei stabilen Brennverhältnissen eine zur Erreichung hoher thermischer Wirkungsgrade vorteilhafte Verkürzung der gesamten Verbrennungsdauer erreicht werden.

In einer vorteilhaften Weiterbildung der Erfindung sind die Kraftstoffaustrittsöffnungen an die für die Darstellung des Vollastverhaltens erforderlichen großen Durchflussquerschnitte angepasst. Hierdurch ergibt sich allerdings bei Verwendung von Einspritzdüsen mit konstantem Kraftstoffaustrittsquerschnitt eine für die Stabilität der Kraftstoffentflammung bei niedriger Motorlast und entsprechend geringen erforderlichen Kraftstoff-Einblasemengen, eine für die stabile Entflammung an der Zündeinrichtung ungünstig kurze Einblasedauer. Daher ist es vorteilhaft die bei geringen Motorlasten zur Erreichung einer stabilen Entflammung jeweils optimale Einblasedauer durch eine entsprechende Anpassung des Ventilnadelhubes und damit des Düsendurchflussverhaltens einzustellen. Darüber hinaus haben Versuche ergeben, dass der Verbrennungsablauf des Kraftstoff-Luftgemisches durch die Anpassung des zeitlichen Verlaufes der Einblasung der Hauptkraftstoffmenge mittels eines während des Einblasevorganges variierenden Ventilnadelhubes in sehr vorteilhafter Weise beeinflusst werden kann.

Zur genauen Regelung des Einblasevorganges und zur Sicherstellung eines für alle Zylinder der Brennkraftmaschine gleichen Verbrennungsablaufes ist es erforderlich, dass zumindest der Einblasezeitpunkt, bei variablem Einblasequerschnitt außerdem auch der Düsennadelhub betriebspunktabhängig durch die Messung der Ventilöffnung eines oder aller Gaseinblasedüsen erfasst wird.

In vorteilhafter Ausgestaltung ist eine betriebspunktabhängige Regelung der elektrischen Heizleistung für die Glühelemente vorgesehen, da besonders bei hohen Motorlasten und den dabei auftretenden höheren Brennraumtemperaturen der Zündvorrichtung Verbrennungswärme zugeführt wird und so die zur Erhaltung der für die Oberflächenzündung erforderlichen elektrische Heizleistung reduziert werden kann. Hierdurch wird eine beträchtliche Erhöhung der Lebensdauer der Zündvorrichtung erreicht. Andererseits ist bei niedrigen Motorlasten mit den damit verbundenen niedrigeren Brennraumtemperaturen sowie bei höheren Motordrehzahlen und niedrigen Motorlasten ein größerer Wärmeverlust der Zündeinrichtung verbunden, der zur Darstellung eines aussetzerfreien und schadstoffarmen Motorbetriebs durch eine Anhebung der elektrischen Leistung der Zündvorrichtung kompensiert werden muss.

Aufgrund der bei der erfindungsgemäßen Ausführung des Glühzündvorrichtung erreichbaren hohen Zündsicherheit des Kraftstoff-Luftgemisches lässt sich vorteilhaft zur Verminderung der Stickoxidemission das Abgas der Brennkraftmaschine geregelt und betriebspunktabhängig gekühlt und/oder ungekühlt mit Abgasrückführraten von bis zu 70 Prozent in die Verbrennungstuftzuführung der Brennkraftmaschine zurückzuführen.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist. Es stellen dar:
- Fig. 1:: eine Seitenansicht der zu einer Brennraummulde ausgerichteten Gaseinblasedüse und Zündvorrichtung,
- Fig. 2:: eine Detailansicht der Zündvorrichtung nach Fig.1 und

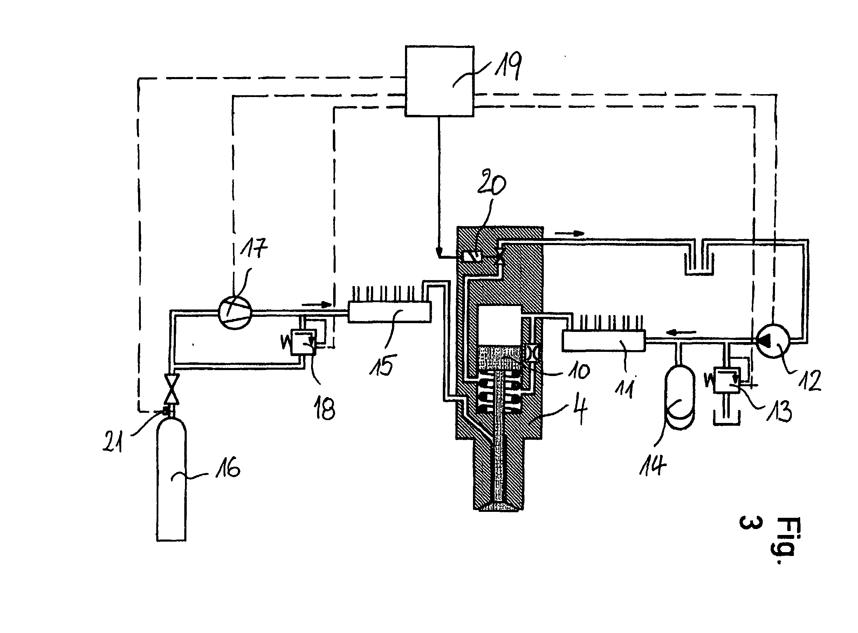

- Fig. 3:: ein Gesamtschema der fahrzeugseitigen Kraftstoff- und Hydraulikversorgung sowie die Regelung des Gesamtsystems

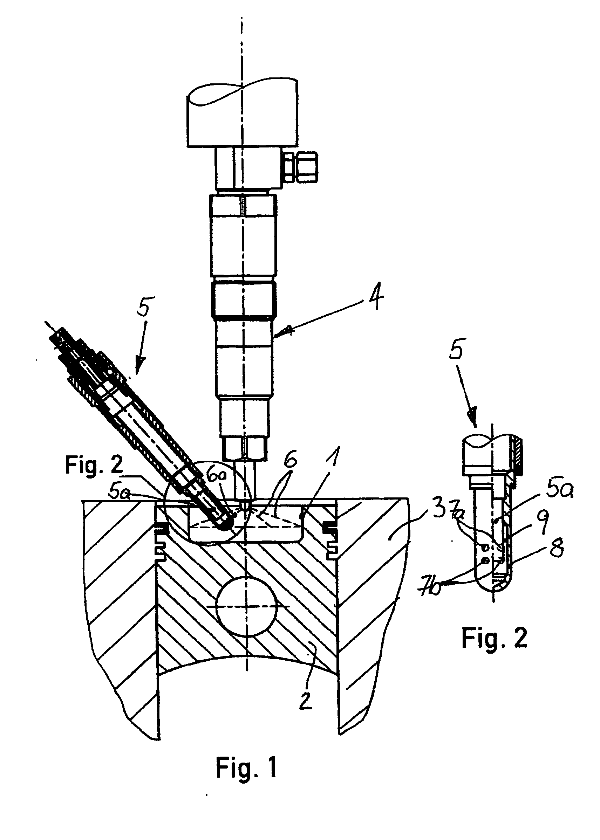

Bei dem Ausführungsbeispiel nach Fig. 1 sind die erfindungswesentlichen Bauteile der luftverdichtenden Brennkraftmaschine dargestellt. Diese kann in Reihen- oder V-Bauart mit beliebigen Zylinderzahlen und beliebigem Hubvolumen ausgebildet sein. Die Brennkraftmaschine weist zumindest eine Brennraummulde 1 enthaltenden Kolben 2 auf, der in einem von einem nicht dargestellten Zylinderkopf unter Bildung eines Arbeitsraumes abgedeckten Zylinder 3 bewegbar ist. In diesem Arbeitsraum, der im wesentlichen aus der Kolbenmulde (Brennraummulde) 1 besteht, wird die schnelle Bildung eines Kraftstoff-Luftgemisches durch eine zum Zeitpunkt der Gaseinblasung bestehende Ladungsrotation unterstützt. In dem Zylinderkopf ist eine zu der Kolbenmulde 1 ausgerichtete Gaseinblasedüse 4, durch die ein brennbarer gasförmiger Kraftstoff in den Arbeitsraum eingebracht wird, sowie eine in die Brennraummulde 1 hineinragende Zündvorrichtung 5 angeordnet. Die Gaseinblasedüse 4 ist zentrisch zu der Brennraummulde 1 ausgerichtet und weist vorzugsweise sieben (7) Kraftstoffaustrittsöffnungen 6 auf.

Eine der Kraftstoffaustrittsöffnungen 6a ist auf die Zündvorrichtung 5 derart ausgerichtet, dass der aus dieser Kraftstoffaustrittsöffnung 6a austretende Kraftstoffstrahl in den Bereich von zumindest einer der Brennstoffdurchtrittsöffnungen 7 auftrifft, die in eine die Zündvorrichtung 5 umgebende Abschirmhülse 8 eingelassen sind. Zumindest eine der Brennstoffdurchtrittsöffnungen 7 dient als Eintrittsöffnung 7a (Figur 2) in den freien, zylinderförmigen Raum 9 zwischen der Zündvorrichtung 5 und der Abschirmhülse 8. Die Anordnung der Zündvorrichtung im Zylinderkopf ist nun so gewählt, dass der aus der Kraftstoffaustrittsbohrung 6a austretende Kraftstoffstrahl eine freie Strahllänge von 5% bis 10% des Brennraummuldendurchmessers aufweist. Hierdurch wird sichergestellt, dass unter allen Betriebsbedingungen eine ausreichend stabile Gaswolke vor den Eintrittsöffnungen 7a in der Abschirmhülse der Zündvorrichtung gebildet wird. Der in den Raum zwischen dem Heizelement 5a der Zündvorrichtung 5 und der Abschirmhülse 8 eingetretene Kraftstoff, der mit Brennluft vermischt ist, wird an der heißen Oberfläche des Heizelementes 5a entzündet. Das brennende Gemisch breitet sich entlang des zylinderförmigen Raums 9 aus und tritt durch weitere als Austrittsöffnungen 7b fungierende Brennstoffdurchtrittsöffnungen 7 wieder aus dem Raum 9 aus. Diese Austrittsöffnungen 7b liegen unterhalb der Eintrittsöffnungen 7a. Von diesem ausgetretenen Gemisch werden Gemischteile im Bereich der Strahlwurzel der aus den weiteren Kraftstoffaustrittsöffnungen 6 austretenden Kraftstoffstrahlen unter der Gaseinblasedüse 4 entflammt.

Das Gaseinblaseventil 4 ist als hydraulisch betätigtes Gasventil ausgeführt, wobei die Steuerung des Hydraulikdruckes durch ein elektromagnetisches Hydraulikventil erreicht wird. Zur Realisierung von Voreinblasung sowie mehrfach unterteilter Einblasung der Haupteinblasung ist es sinnvoll, ein durch einen Piezoaktor angetriebenes Hydraulikschaltventil zu verwenden, da dieses eine ausreichend hohe Schaltfrequenz aufweist. Versuche haben gezeigt, dass die Kombination eines Piezoaktor angetriebenen Hydraulikschaltventils mit dem hydraulischen Antrieb des Gasventils die Anforderungen an Schaltfrequenz sowie Genauigkeit von Einblasebeginn und Gaseinblasedauer erfüllt.

Die in Fig. 1 dargestellte Zündeinrichtung 5 besitzt ein keramisches Heizelement 5a, da auf diese Weise eine hohe Haltbarkeit der Zündeinrichtung gewährleistet werden kann. Zusätzlich kann zur weiteren Verbesserung der Standfestigkeit der Zündeinrichtung 5 die Abschirmhülse 8 aus einem keramischen Material gefertigt werden. Eine aufgrund des bei kleineren Motoren und damit baugrößenbedingt geringen Volumens des zylinderförmigen Raumes 9 zwischen der Zündvorrichtung 5 und der Abschirmhülse 8 verminderte an der heißen Oberfläche entflammte Gasmenge kann zu einer verschleppten Verbrennung und entsprechend höheren Kohlenwasserstoff- und Kohlenmonoxidemissionen führen. In diesem Fall führt eine katalytische Beschichtung der Abschirmhülse 9 mit Platin oder Palladium zu einer Beschleunigung des Entflammungsvorganges und damit zu einer stabileren Verbrennung.

Da das erfindungsgemäße Verfahren zum Betrieb einer Verbrennungskraftmaschine mit direkt in den Brennraum eingeblasenem gasförmigen Kraftstoff einen konstant hohen Gasdruck vor den Gaseinblaseventilen 4 erfordert, ist für den Fall des Einsatzes in Kraftfahrzeugen, ein entsprechend modifiziertes fahrzeugseitiges Kraftstoffsystem einzusetzen. In Fig. 2 ist ein solches Kraftstoffsystem mit den Einrichtungen zur Gasversorgung und zur Bereitstellung des Hydraulikfluids zum Betrieb eines hydraulisch betätigten Gasventils 4 dargestellt. Das Gasventil wird durch ein Hydraulikfluid betätigt, das auf einen mit der Ventilnadel verbundenen Kolben 10 wirkt. Die Versorgung der bei einer mehrzylindrigen Verbrennungskraftmaschine entsprechenden Anzahl an Gaseinblaseventilen 4 erfolgt über eine gemeinsame Versorgungsleitung 11, in der durch eine Hydraulikpumpe 12 ein Druck von 250 bis 300 bar (20 bis 30 MPa) erzeugt wird. Die Druckregelung erfolgt mittels dem Druckregelventil 13 und zur Aufrechterhaltung des Hydraulikdruckes auch nach Abschalten des Motors dient ein Hydrospeicher 14.

Gasseitig wird das Gaseinblaseventil 4 über eine für alle Gasventile gemeinsame Versorgungsleitung 15 mit einem Gasdruck von 200 bar (20 MPa) versorgt. Das Gas wird mit dem entsprechend dem Füllungszustand des Gastanks 16 herrschenden Druck über einen fahrzeugtauglichen Verdichter 17 und eine Druckregeleinrichtung 18 der Versorgungsleitung 15 zugeführt. Ist der Gastank mit einem Druck von 200 bar (20 MPa) voll aufgeladen, so wird der Verdichter mittels des Einblas- und Motorsteuergerätes 19 so angesteuert, daß nur ein geringfügig höherer Druck, der zur genauen Versorgungsleitungsdruckregelung erforderlich ist, aufgebaut wird. Mit zunehmender Entnahme des Gases und entsprechend geringer werdendem Druck, gemessen mittels eines Druckgebers 21 am Gastank, wird die jeweils erforderliche Druckdifferenz zur Darstellung eines konstanten Gaseinblasedruckes von 200 bar (20 MPa) durch den Verdichter 17 aufgebracht. Das Einblase- und Motorsteuergerät 19 steuert nicht nur das Magnetventil 20 im hydraulischen Teil des Gasennblaseventils 4 an, sondern regelt auch den Gasverdichter 17, den Antrieb der Hydraulikpumpe 12 sowie die entsprechenden Druckregelventile 13 und 18.

## Patentansprüche

1. Verfahren zum Betreiben einer luftverdichtenden Brennkraftmaschine, die zumindest einen eine Brennraummulde (1) beinhaltenden Kolben (2) aufweist, der in einem von einem Zylinderkopf unter Bildung eines Arbeitsraumes abgedeckten Zylinder (3) bewegbar ist,
wobei in dem Zylinderkopf eine zu der Brennraummulde (1) im wesentlichen zentrisch ausgerichtete Gaseinblasedüse (4), durch die ein brennbarer gasförmiger Kraftstoff in den Arbeitsraum eingebracht wird, sowie eine in geringem Abstand zur Gaseinblasedüse (4) angebrachte, in die Brennraummulde (1) hineinragende Zündvorrichtung (5) angeordnet sind,
wobei zumindest ein aus einer Kraftstoffaustrittsöffnung (6) der Gaseinblasedüse (4) austretender Kraftstoffstrahl auf die Zündvorrichtung (5) in dem Bereich von mindestens einer als Eintrittsöffnung (7a) ausgebildete Brennstoffdurchtrittsöffnung (7) auftrifft, die in eine die Zündvorrichtung (5) umgebende Abschirmhülse (8) eingelassen ist, und gasförmiger Kraftstoff durch die Eintrittsöffnung (7a) in die Abschirmhülse (8) eintritt, so daß das rasche Austreten von brennendem Kraftstoff-Luft-Gemisch durch mindestens eine als Austrittsöffnung (7b) ausgebildete, weitere Brennstoffdurchtrittsöffnung (7), die beabstandet von der Eintrittsöffnung (7a) auf der selben Oberfläche wie diese angeordnet ist, relativ wenig behindert wird, um Zündverzüge zu ermöglichen, die kürzer sind als die entsprechenden Einblasedauern für den gasförmigen Kraftstoff.

2. Verfahren nach Anspruch 1, **dadurch gekennzeichnet,**
**daß** die Gaseinblasedüse (4) mit weiteren Kraftstoffaustrittsöffnungen (6a) zur Verteilung des Kraftstoffs in dem Brennraum versehen ist und/oder
Gaseinblasedüse (4) zentrisch zu der Brennraummulde (1) ausgerichtet und die Zündvorrichtung (5) seitlich zu der Gaseinblasedüse (4) in die Brennraummulde (1) hineinragend angeordnet ist und der auf die Abschirmhülse (8) der Zündvorrichtung (5) gerichtete Kraftstoffstrahl eine freie Strahllänge von 5 bis 10 Prozent des Durchmessers der Brennraummulde (1) aufweist.

3. Verfahren nach einem der vorherigen Ansprüche, **dadurch gekennzeichnet, daß** die als Austrittsöffnung (7b) ausgebildete weitere Brennstoffdurchtrittsöffnung (7) unterhalb der Eintrittsöffnung (7a) angeordnet und/oder so ausgerichtet ist, daß durch das aus der Austrittsöffnung (7b) austretende brennende Kraftstoff-Luft-Gemisch Gemischteile im Bereich der Strahlwurzel unter der Gaseinblasedüse (4) entflammt werden.

4. Verfahren nach einem der vorherigen Ansprüche, **dadurch gekennzeichnet, daß** eine Kraftstoffmenge von 5% bis 10% der Vollastmenge vor der Haupteinspritzmenge in den Arbeitsraum eingebracht wird und/oder
daß der Verlauf der Haupteinspritzmenge in zwei bis vier hintereinander erfolgende einzelne Einblasevorgänge unterteilt wird und/oder
daß die Kraftstoffaustrittsöffnungen (6, 6a) an die für die Darstellung des Vollastverhaltens erforderlichen Durchflußquerschnitte angepaßt sind.

5. Verfahren nach einem der vorherigen Ansprüche, **dadurch gekennzeichnet,**
**daß** insbesondere bei geringen Motorlasten die zur Erreichung einer stabilen Entflammung jeweils optimale Einblasedauer durch eine entsprechende Anpassung des Ventilnadelhubes und damit des Düsendurchflußverhaltens eingestellt wird und/oder
**daß** der Verbrennungsablauf des Kraftstoff-Luftgemisches durch die Anpassung des zeitlichen Verlaufes der Einblasung der Hauptkraftstoffmenge mittels eines während des Einblasevorganges variierenden Ventilnadelhubes erreicht wird.

6. Verfahren nach einem der vorherigen Ansprüche, **dadurch gekennzeichnet,**
**daß** der Einblasezeitpunkt betriebspunktabhängig (Kennfeldregelung) durch die Erfassung der Ventilöffnung einer oder aller Gaseinblasedüsen (4) geregelt wird
und/oder daß die elektrische Heizleistung der Zündvorrichtung (5) in Abhängigkeit vom Betriebspunkt der Brennkraftmaschine so gesteuert wird, daß eine für die sichere Zündung des Brennstoff-Luft-Gemisches erforderliche Oberflächentemperatur des Zündvorrichtungselementes sichergestellt wird, und/oder
**daß** das Abgas der Brennkraftmaschine geregelt und betriebspunktabhängig gekühlt und/oder ungekühlt in die Verbrennungsluftzuführung der Brennkraftmaschine zurückgeführt wird.

7. Luftverdichtende Brennkraftmaschine, die mindestens einen eine Brennraummulde (1) aufweisenden Kolben (2) aufweist, der in einem von einem Zylinderkopf unter Bildung eines Arbeitsraums abgedeckten Zylinder (3) bewegbar ist,
wobei in dem Zylinderkopf eine zu der Brennraummulde (1) ausgerichtete Gaseinblasedüse (4), durch die ein brennbarer gasförmiger Kraftstoff in den Arbeitsraum eingebracht wird, sowie eine in die Brennraummulde (1) hineinragende Zündvorrichtung (5) angeordnet sind,
wobei die Zündvorrichtung (5) zumindest in dem in den Brennraum hineinragenden Bereich von einer Abschirmhülse (8) umfaßt ist und in der Abschirmhülse (8) mindestens eine Brennstoffdurchtrittsöffnung (7) als Eintrittsöffnung (7a) für Kraftstoff und mindestens eine zu der Eintrittsöffnung (7a) benachbarte Brennstoffdurchtrittsöffnung (7) als Austrittsöffnung (7b) für den Austritt von von der Zündvorrichtung (5) entzündetem, brennendem Kraftstoff-Luft-Gemisch eingelassen sind, wobei gasförmiger Kraftstoff durch die Eintrittsöffnung (7a) in die Abschirmhülse (8) eintritt, so daß das rasche Austreten von brennendem Kraftstoff-Luft-Gemisch durch die Austrittsöffnung (7b) relativ wenig behindert wird, um um Zündverzüge zu ermöglichen, die kürzer sind als die entsprechenden Einblasedauern für den gasförmigen Kraftstoff.

8. Brennkraftmaschine nach Anspruch 7, **dadurch gekennzeichnet,**
**daß** die Gaseinblasedüse (4) mindestens eine Kraftstoffaustrittsöffnung (6) aufweist, die zu der Brennstoffdurchtrittsöffnung (7) ausgerichtet ist, und/oder
**daß** die Gaseinblasedüse (4) fünf bis zwölf Kraftstoffaustrittsöffnungen (6) aufweist und/oder
**daß** die Abschirmhülse (8) zwei bis zehn, bevorzugt vier bis sechs Brennstoffdurchtrittsöffnungen (7) aufweist und/oder
**daß** mindestens einer der Kraftstoffstrahlen der Gaseinblasedüse (4) auf die Eintrittsöffnung (7a) ausgerichtet ist und daß die Austrittsöffnung (7b) auf den Bereich der Strahlwurzel unter der Gaseinblasedüse (4) ausgerichtet ist.

9. Brennkraftmaschine nach Anspruch 7 oder 8, **dadurch gekennzeichnet,**
**daß** die Zündvorrichtung (5) in einer Entfernung von 5% bis 10% des Durchmessers der Brennraummulde (1) von der Gaseinblasedüse (4) entfernt angeordnet ist und/oder
**daß** die Zündvorrichtung (5) vier bis acht Millimeter von der Gaseinblasedüse (4) entfernt angeordnet ist und/oder
**daß** die Gaseinblasedüse (4) elektromagnetisch geschaltet und hydraulisch angetrieben ist.

10. Brennkraftmaschine nach einem der Ansprüche 7 bis 9, **dadurch gekennzeichnet, daß** die Gaseinblasung mit Voreinblasung beziehungsweise unterteilter Einblasung der Hauptkraftstoffmenge mit einem hydraulisch angetriebenen Gaseinblaseventil unter Verwendung eines Hydraulikventils mit Piezoaktors erfolgt und/oder
daß die Zündeinrichtung (5) ein keramisches Heizelement ist und/oder
daß die Abschirmhülse (8) aus einem hochdichten Keramikmaterial mit guter Wärmeleitfähigkeit besteht und/oder
daß die Abschirmhülse (8) zur Verminderung der erforderlichen Heizelement-Oberflächentemperatur eine katalytisch wirksame Beschichtung zumindest auf der Innenseite der Abschirmhülse (8) aufweist.

## Claims

1. Method for operating an air-compressing internal combustion engine which has at least one piston (2) which includes a combustion chamber cavity (1) and can move within a cylinder (3) covered by a cylinder head to form a working space,
a gas injection nozzle (4), which is oriented substantially centrally with respect to the combustion chamber cavity (1) and through which a combustible gaseous fuel is introduced into the working space, and an ignition device (5), which is arranged at a short distance from the gas injection nozzle (4) and projects into the combustion chamber cavity (1), being arranged in the cylinder head,
at least one fuel jet, which emerges from a fuel outlet opening (6) of the gas injection nozzle (4), striking the ignition device (5) in the region of at least one fuel passage opening (7), which is designed as an inlet opening (7a) and is formed in a shielding sleeve (8) surrounding the ignition device (5), and gaseous fuel entering the shielding sleeve (8) through the inlet opening (7a), so that the rapid emergence of burning fuel-air mix through at least one further fuel passage opening (7), which is designed as an outlet opening (7b) and is arranged at a distance from the inlet opening (7a), on the same surface as the latter, is impeded to only a relatively slight extent, in order to allow ignition delays which are shorter than the corresponding injection times for the gaseous fuel.

2. Method according to Claim 1, **characterized in**
**that** the gas injection nozzle (4) is provided with further fuel outlet openings (6a) for distributing the fuel in the combustion chamber, and/or
**that** the gas injection nozzle (4) is oriented centrally with respect to the combustion chamber cavity (1), and the ignition device (5) is arranged so as to project into the combustion chamber cavity (1) laterally with respect to the gas injection nozzle (4), and the fuel jet directed onto the shielding sleeve (8) of the ignition device (5) has a free jet length amounting to 5 to 10 percent of the diameter of the combustion chamber cavity (1).

3. Method according to one of the preceding claims, **characterized in that** the further fuel passage opening (7), designed as an outlet opening (7b), is arranged below the inlet opening (7a) and/or is oriented in such a way that the burning fuel-air mix which emerges from the outlet opening (7b) ignites parts of the mix in the region of the root of the jet below the gas injection nozzle (4).

4. Method according to one of the preceding claims, **characterized in**
**that** a fuel quantity amounting to 5% to 10% of the full-load quantity is introduced into the working space prior to the main injection quantity, and/or
**that** the profile of the main injection quantity is divided into two to four successive individual injection operations, and/or
**that** the fuel outlet openings (6, 6a) are matched to the through-flow cross sections required to produce the full-load performance.

5. Method according to one of the preceding claims, **characterized in**
**that**, in particular at low engine loads, the injection time which is in each case optimum for achieving stable ignition is set by suitable adjustment of the valve needle lift and therefore of the nozzle through-flow properties, and/or
**that** the combustion sequence of the fuel-air mix is achieved by adjusting the time profile of the injection of the main fuel quantity by means of a valve needle lift which varies during the injection operation.

6. Method according to one of the preceding claims, **characterized in**
**that** the injection instant is subject to closed-loop control as a function of operating point (characteristic diagram control) by recording the valve opening of one or all the gas injection nozzles (4), and/or
**that** the electrical heating power of the ignition device (5) is subject to open-loop control as a function of the operating point of the internal combustion engine, in such a way as to ensure a surface temperature of the ignition device element which is required for reliable ignition of the fuel-air mix, and/or
**that** the exhaust gas from the internal combustion engine is recirculated, under closed-loop control and in cooled and/or uncooled form depending on the operating point, into the combustion air feed of the internal combustion engine.

7. Air-compressing internal combustion engine having at least one piston (2) which includes a combustion chamber cavity (1) and can move within a cylinder (3) covered by a cylinder head so as to form a working space,
a gas injection nozzle (4), which is directed towards the combustion chamber cavity (1) and through which a combustible gaseous fuel is introduced into the working space, and an ignition device (5), which projects into the combustion chamber cavity (1), being arranged in the cylinder head,
the ignition device (8) being surrounded, at least in the region which projects into the combustion chamber, by a shielding sleeve (8), and at least one fuel passage opening (7), as inlet opening (7a) for fuel, and at least one fuel passage opening (7), adjacent to the inlet opening (7a), as outlet opening (7b) for the emergence of burning fuel-air mix that has been ignited by the ignition device (5) being formed in the shielding sleeve (8), gaseous fuel entering the shielding sleeve (8) through the inlet opening (7a), so that the rapid emergence of burning fuel-air mix through the outlet opening (7b) is impeded to a relatively slight extent, in order to allow ignition delays which are shorter than the corresponding injection times for the gaseous fuel.

8. Internal combustion engine according to Claim 7, **characterized in**
**that** the gas injection nozzle (4) has at least one fuel outlet opening (6), which is directed towards the fuel passage opening (7), and/or
**that** the gas injection nozzle (4) has five to twelve fuel outlet openings (6), and/or in that the shielding sleeve (8) has two to ten, preferably four to six, fuel passage openings (7), and/or
**that** at least one of the fuel jets from the gas injection nozzle (4) is directed onto the inlet opening (7a), and in that the outlet opening (7b) is directed onto the region of the root of the jet below the gas injection nozzle (4).

9. Internal combustion engine according to Claim 7 or 8, **characterized in**
**that** the ignition device (5) is arranged at a distance of 5% to 10% of the diameter of the combustion chamber cavity (1) from the gas injection nozzle (4), and/or
**that** the ignition device (5) is arranged at a distance of four to eight millimetres from the gas injection nozzle (4), and/or
**that** the gas injection nozzle (4) is electromagnetically switched and hydraulically driven.

10. Internal combustion engine according to one of Claims 7 to 9, **characterized in**
**that** the injection of gas is carried out with preinjection or split injection of the main fuel quantity, by means of a hydraulically driven gas injection valve using a hydraulic valve with piezoelectric actuator, and/or
**that** the ignition device (5) is a ceramic heating element, and/or
**that** the shielding sleeve (8) consists of a high-density ceramic material with a good thermal conductivity, and/or
**that** the shielding sleeve (8) has a catalytically active coating at least on the inner side of the shielding sleeve (8), in order to lower the heating element surface temperature required.

## Revendications

1. Procédé pour faire fonctionner un moteur à combustion interne du type comprimant l'air, qui présente au moins un piston (2) présentant un renfoncement (1) faisant office de chambre de chauffe, le piston étant mobile dans un cylindre (3) fermé par une tête de cylindre pour obtenir une chambre de travail,
un injecteur de gaz (4) orienté en position essentiellement centrale par rapport au renfoncement (1) faisant office de chambre de chauffe, injecteur à travers lequel un carburant inflammable gazeux est introduit dans la chambre de travail, ainsi qu'un dispositif d'allumage (5) faisant saillie dans le renfoncement (1) faisant office de chambre de chauffe, monté à une courte distance par rapport à l'injecteur de gaz (4), étant disposés dans la tête de cylindre,
au moins un jet de carburant, qui s'évacue en passant par une ouverture d'évacuation de carburant (6) de l'injecteur de gaz (4), aboutissant dans le dispositif d'allumage (5) dans la zone d'au moins une ouverture (7) de passage de carburant réalisée sous la forme d'une ouverture d'entrée (7a) qui est pratiquée dans une gaine de protection entourant le dispositif d'allumage (5), et du carburant gazeux pénétrant dans la gaine de protection (8) en passant par l'ouverture d'entrée (7a), de telle sorte que l'on entrave de manière relativement minime l'évacuation rapide du mélange carburant-air en train de brûler à travers au moins une autre ouverture de passage de carburant (7) réalisée sous la forme d'une ouverture d'évacuation (7b) qui est disposée sur la même surface que celle dans laquelle est pratiquée l'ouverture d'entrée (7a) tout en étant écartée de cette dernière, pour pouvoir obtenir des délais d'allumage qui sont plus courts que les temps d'injection correspondants pour le carburant gazeux.

2. Procédé selon la revendication 1, **caractérisé**
**en ce que** l'injecteur de gaz (4) est muni d'ouvertures d'évacuation de carburant supplémentaires (6a) pour la distribution du carburant dans la chambre de chauffe et/ou
l'injecteur de gaz (4) est orienté en position centrale par rapport au renfoncement (1) faisant office de chambre de chauffe et le dispositif d'allumage (5) est disposé latéralement par rapport à l'injecteur de gaz (4) en faisant saillie dans le renfoncement (1) faisant office de chambre de chauffe et le jet de carburant orienté sur la gaine de protection (8) du dispositif d'allumage (5) présente une longueur de jet libre représentant de 5 à 10 % du diamètre du renfoncement (1) faisant office de chambre de chauffe.

3. Procédé selon l'une quelconque des revendications précédentes, **caractérisé en ce que** l'ouverture de passage de carburant supplémentaire (7) réalisée sous la forme d'ouverture d'évacuation (7b) est disposée en dessous de l'ouverture d'entrée (7a) et/ou est orientée de telle sorte que des fractions mixtes du mélange carburant-air brûlant qui s'évacue en passant par l'ouverture d'évacuation (7b) s'enflamment dans la zone de la base du jet en dessous de l'injecteur de gaz (4).

4. Procédé selon l'une quelconque des revendications précédentes, **caractérisé**
**en ce qu'**une quantité de carburant représentant de 5 % à 10 % de la quantité à pleine charge est introduite dans la chambre de travail avant la quantité d'injection principale et/ou
**en ce que** l'écoulement de la quantité d'injection principale est subdivisé en un nombre de deux à quatre processus d'injection individuels successifs et/ou
**en ce que** les ouvertures d'évacuation de carburant (6, 6a) sont adaptées aux sections transversales d'écoulement requises pour la réalisation du comportement à pleine charge.

5. Procédé selon l'une quelconque des revendications précédentes, **caractérisé**
**en ce que**, en particulier dans le cas de charges de moteur peu élevées, la durée d'injection respectivement optimale pour atteindre un allumage stable est réglée par une adaptation correspondante de la course du pointeau de soupape, partant du comportement du débit à travers l'injecteur et/ou
**en ce qu'**on obtient le déroulement de combustion du mélange carburant-air via l'adaptation de la courbe temporelle de l'injection de la quantité principale de carburant à l'aide d'une course du pointeau de soupape variant au cours du processus d'injection.

6. Procédé selon l'une quelconque des revendications précédentes, **caractérisé**
**en ce que** le moment de l'injection est réglé en fonction du point de fonctionnement (définition des réseaux de caractéristiques) via la détermination de l'ouverture de la soupape d'un injecteur ou de tous les injecteurs de gaz (4)
et/ou en ce que la capacité de chauffage électrique du dispositif d'allumage (5) est commandée, en fonction du point de fonctionnement du moteur à combustion interne, de telle sorte que l'on garantit une température superficielle de l'élément de dispositif d'allumage requise pour l'allumage fiable du mélange carburant-air, et/ou
**en ce qu'**on règle les gaz d'échappement du moteur à combustion interne et on les renvoie à l'état refroidi et/ou non refroidi dans l'alimentation d'air de combustion du moteur à combustion interne, en fonction du point de fonctionnement.

7. Moteur à combustion du type comprimant l'air qui présente au moins un piston (2) présentant un renfoncement (1) faisant office de chambre de chauffe, le piston étant mobile dans un cylindre (3) fermé par une tête de cylindre pour obtenir une chambre de travail,
un injecteur de gaz (4) orienté en direction du renfoncement (1) faisant office de chambre de chauffe, injecteur à travers lequel un carburant inflammable gazeux est introduit dans la chambre de travail, ainsi qu'un dispositif d'allumage (5) faisant saillie dans le renfoncement (1) faisant office de chambre de chauffe, étant disposés dans la tête de cylindre,
le dispositif d'allumage (5) étant recouvert, au moins dans la zone faisant saillie dans la chambre de chauffe, d'une gaine de protection (8), au moins une ouverture (7) de passage de carburant réalisée sous la forme d'une ouverture d'entrée (7a) pour le carburant et au moins une ouverture (7) de passage de carburant voisine de l'ouverture d'entrée (7a), réalisée sous la forme d'une ouverture d'évacuation (7b) pour l'évacuation du mélange carburant-air brûlant enflammé par le dispositif d'allumage (5) étant pratiquées dans la gaine de protection (8), du carburant gazeux pénétrant dans la gaine de protection (8) en passant par l'ouverture d'entrée (7a), de telle sorte que l'on entrave de manière relativement minime l'évacuation rapide du mélange carburant-air en train de brûler à travers l'ouverture d'évacuation (7b), pour pouvoir obtenir des délais d'allumage qui sont plus courts que les temps d'injection correspondants pour le carburant gazeux.

8. Moteur à combustion interne selon la revendication 7,
**caractérisé**
**en ce que** l'injecteur de gaz (4) présente au moins une ouverture d'évacuation de carburant (6) qui est orientée vers l'ouverture de passage de carburant (7), et/ou
**en ce que** l'injecteur de gaz (4) présente de cinq à douze ouvertures d'évacuation de carburant (6), et/ou
**en ce que** la gaine de protection (8) présente de deux à dix, de préférence de quatre à six ouvertures de passage de carburant (7), et/ou
**en ce qu'**au moins un des jets de carburant de l'injecteur de gaz (4) est orienté en direction de l'ouverture d'entrée (7a) et en ce que l'ouverture d'évacuation (7b) est orientée en direction de la zone de la base du jet, en dessous de l'injecteur de gaz (4).

9. Moteur à combustion interne selon la revendication 7 ou 8,
**caractérisé**
**en ce que** le dispositif d'allumage (5) est disposé à l'écart de l'injecteur de gaz (4) à une distance qui représente de 5 % à 10 % du diamètre du renfoncement (1) faisant office de chambre de chauffe, et/ou
**en ce que** le dispositif d'allumage (5) est disposé à une distance de quatre à huit millimètres de l'injecteur de gaz (4), et/ou
**en ce que** l'injecteur de gaz (4) est soumis à une commutation électromagnétique et à un entraînement hydraulique.

10. Moteur à combustion interne selon l'une quelconque des revendications 7 à 9, **caractérisé en ce que** l'injection de gaz a lieu avec une injection préalable, respectivement une injection subdivisée de la quantité principale de carburant avec une soupape d'injection de gaz à entraînement hydraulique en utilisant une soupape hydraulique comprenant un actionneur piézo-électrique, et/ou
**en ce que** le dispositif d'allumage (5) est un élément de chauffage céramique, et/ou
**en ce que** la gaine de protection (8) est constituée d'une matière céramique très dense possédant une bonne conductibilité thermique, et/ou
**en ce que** la gaine de protection (8) présente, pour diminuer la température superficielle requise de l'élément de chauffage, une couche à activité catalytique, au moins sur le côté interne de la gaine de protection (8).
